# EUROPEAN PATENT APPLICATION

(11) **EP 4 656 438 A1**
(43) Date of publication of application: **03.12.2025**
(21) Application number: 24778763.3
(22) Date of filing: 13.02.2024
(51) Int. Cl.: B60L 3/00, B60L 7/14, B60L 50/60, B60L 58/14

(54) **DUMP TRUCK**

(30) Priority: 31.03.2023 JP 2023057829
(71) Applicant: Hitachi Construction Machinery Co., Ltd., Tokyo 110-0015 (JP)
(72) Inventor: NAKATE Youhei, Tsuchiura-shi, Ibaraki 300-0013 (JP); KANEZAWA Hiroshi, Tsuchiura-shi, Ibaraki 300-0013 (JP); IKEDA Jun, Tsuchiura-shi, Ibaraki 300-0013 (JP); KIMURA Takuya, Tsuchiura-shi, Ibaraki 300-0013 (JP); SAIJOU Kimihiro, Tsuchiura-shi, Ibaraki 300-0013 (JP); ABE Yuusuke, Tsuchiura-shi, Ibaraki 300-0013 (JP); LI Zhi, Tsuchiura-shi, Ibaraki 300-0013 (JP); KANAYA Yousuke, Tsuchiura-shi, Ibaraki 300-0013 (JP); SUZUKI Shoutarou, Tsuchiura-shi, Ibaraki 300-0013 (JP)
(74) Representative: Manitz Finsterwald Patent- und Rechtsanwaltspartnerschaft mbB
(86) International application number: PCT/JP2024/004869
(87) International publication number: WO 2024/202618

(57) **Abstract**

Provided is an electric dump truck that ensures a hydraulic source required when the electric dump truck is towed without relying on an external hydraulic source, while preventing early deterioration of a battery. The electric dump truck 1 includes: a travel motor 16; a hydraulic pump 20 supplying pressure oil to at least one of a braking device 17 and a steering device 18; a hydraulic pump drive motor 23 driving the hydraulic pump 20; a battery 24 supplying electric power to the travel motor 16 and the hydraulic pump drive motor 23; and a controller 37 controlling power supply from the battery 24 to the travel motor 16 and the hydraulic pump drive motor 23. In a towing mode in which the dump truck 1 is towed, the controller 37 performs control such that electric power of the battery 24 is supplied to only the hydraulic pump drive motor 23.

## Description

### Technical Field

The present invention relates to an electric dump truck that uses a battery as a power source.

### Background Art

When a dump truck becomes unable to travel on its own due to some abnormality including equipment failure and energy shortage, the dump truck is towed to a target point such as a work base.

As a method of towing a dump truck being unable to travel on its own, a towing method is typically used in which the dump truck is towed by another vehicle while being coupled together using a wire rope. In such a towing method, a passenger is required to be onboard the dump truck being unable to travel on its own, and also a braking operation and a steering operation by the passenger are required.

The dump truck being unable to travel on its own cannot often drive even a hydraulic pump that feeds pressure oil to a braking device and a steering device. To feed the pressure oil to the braking device and the steering device, the hydraulic circuit of the dump truck being unable to travel on its own is required to be connected to the hydraulic circuit of another vehicle with a hydraulic hose, which is a problem requiring a lot of time and trouble, for example. Then, there is a study of a method of feeding pressure oil to the braking device and the steering device of the dump truck being unable to travel on its own, when towed, without requiring time and trouble (for example, Patent Literature 1).

Patent Literature 1 discloses a dump truck including an accumulator for storing pressure by pressure oil and a bleed-down control inhibiting device that inhibits release of the pressure stored in the accumulator when the dump truck is towed.

### Citation List

### Patent Literature

Patent Literature 1: JP 2019-48522 A

### Summary of Invention

### Technical Problem

In the dump truck disclosed in Patent Literature 1, however, when the pressure is not sufficiently stored in the accumulator, for example, there may be a situation in which the dump truck cannot drive the braking device and the steering device. As a result, the dump truck disclosed in Patent Literature 1 may not be stably towed to a target point such as a work base.

In addition, the electric dump truck also drives a hydraulic pump by a motor mounted. Thus, when the electric dump truck continuously drives the motor until its battery runs out, early deterioration may occur in the battery.

In view of the above circumstances, the present invention aims to provide an electric dump truck that ensures a hydraulic source required when the electric dump truck is towed without relying on an external hydraulic source, while preventing early deterioration of a battery.

### Solution to Problem

To solve the above-described issues, the dump truck of the present invention is a dump truck of an electric type, including: a travel motor; a hydraulic pump configured to supply pressure oil to at least one of a braking device and a steering device; a hydraulic pump drive motor configured to drive the hydraulic pump; a battery configured to supply electric power to the travel motor and the hydraulic pump drive motor; and a controller configured to control power supply from the battery to the travel motor and the hydraulic pump drive motor. In a towing mode in which the dump truck is towed, the controller performs control such that electric power of the battery is supplied to only the hydraulic pump drive motor.

### Advantageous Effects of Invention

According to the present invention, in the electric dump truck, it is possible to ensure a hydraulic source required when the electric dump truck is towed without relying on an external hydraulic source, while preventing early deterioration of a battery.

### Brief Description of Drawings

Fig. 1 is a side view illustrating a schematic configuration of a dump truck when towed according to the present embodiment.
Fig. 2 is a diagram illustrating a schematic configuration of a hydraulic circuit in the dump truck according to the present embodiment.
Fig. 3 is a schematic electric circuit diagram of the dump truck according to the present embodiment.
Fig. 4 is a flowchart illustrating an exemplary operation of a controller related to towing of the dump truck according to the present embodiment.

### Description of Embodiments

Hereinafter, embodiments of the present invention will be described with reference to the drawings. Parts denoted by identical reference signs in the embodiments have similar functions in the embodiments unless particularly specified otherwise, and description thereof will be omitted.

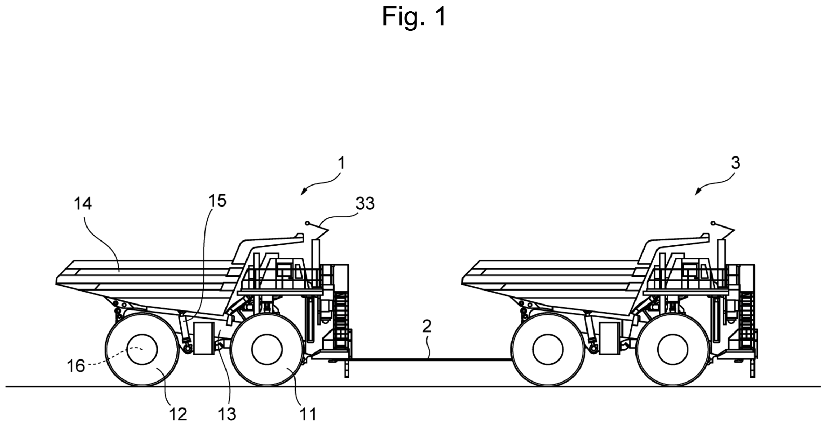

Fig. 1 is a side view illustrating a schematic configuration of a dump truck 1 when towed according to the present embodiment. The dump truck 1 illustrated in Fig. 1 is coupled to another vehicle 3 by a wire rope 2. The other vehicle 3 tows the dump truck 1 being unable to travel on its own to a target point such as a work base while being coupled to the dump truck 1 using the wire rope. The other vehicle 3 may be any type of vehicle that can tow the dump truck 1 being unable to travel on its own, such as the same type of vehicle as the dump truck 1 or a vehicle dedicated to towing.

The dump truck 1 is an electric dump truck that uses a battery as a power source. The dump truck 1 is, for example, a dump truck that hauls earth and sand or minerals and the like excavated in a strip mine.

The dump truck 1 includes, as illustrated in Fig. 1, front wheels 11, rear wheels 12, and a vehicle body 13 as a robust frame coupled to the front wheels 11 and the rear wheels 12. A tray 14 for loading the earth and sand is mounted on the vehicle body 13. The vehicle body 13 and the tray 14 are coupled together by a hoisting device 15.

The dump truck 1 is operated by a rear-wheel drive system in which, of the front and rear wheels 11, 12, the rear wheels 12, which are the left and right wheels on the rear side, serve as driving wheels, and the front wheels 11, which are the left and right wheels on the front side, serve as driven wheels. The rotating shaft portion of the rear wheels 12 is provided with a travel motor 16. The dump truck 1 includes a braking device 17 attached to each of the front and rear wheels 11, 12, and a steering device 18 interposed between the front and rear wheels 11, 12 and the vehicle body 13.

The dump truck 1 is operable in a normal mode, which is an operation mode of travel by rotating the rear wheels 12 as the driving wheels by the travel motor 16, and in a towing mode, which is an operation mode used when the dump truck 1 is towed by another vehicle or the like, in which all of the wheels 11, 12 serve as driven wheels without driving the rear wheels 12. Whichever operation mode the dump truck 1 is in, the normal mode or the towing mode, the dump truck 1 drives the braking device 17 and the steering device 18.

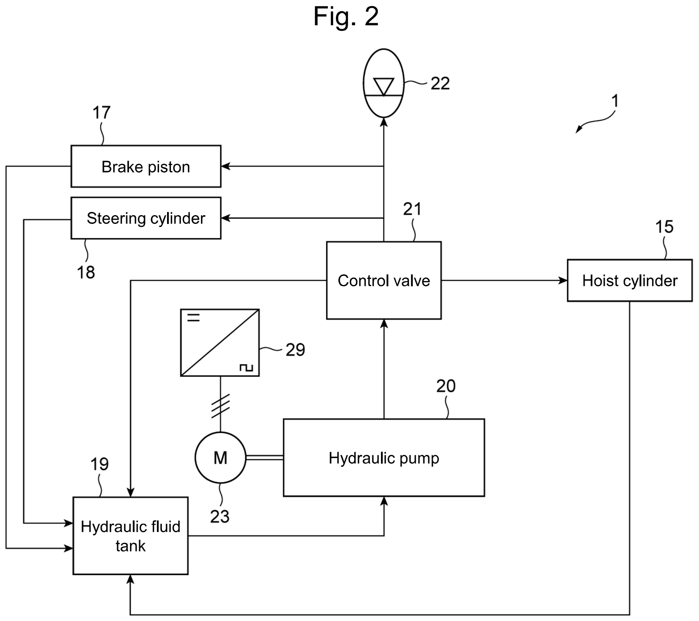

Fig. 2 is a diagram illustrating a schematic configuration of a hydraulic circuit in the dump truck 1 according to the present embodiment.

The hoisting device 15 including a hoist cylinder, the braking device 17 including a brake piston, and the steering device 18 including a steering cylinder are part of the hydraulic actuators of the dump truck 1. As illustrated in Fig. 2, the dump truck 1 includes a hydraulic circuit for driving the hydraulic actuators.

As devices forming the hydraulic circuit, the dump truck 1 includes a hydraulic fluid tank 19, a hydraulic pump 20, a control valve 21, and an accumulator 22.

The hydraulic fluid tank 19 is connected to the hydraulic actuators, such as the braking device 17 and the steering device 18, the hydraulic pump 20, the control valve 21, and the accumulator 22.

The hydraulic pump 20 is connected to the control valve 21, and supplies pressure oil to the hoisting device 15, the braking device 17, the steering device 18, and the accumulator 22 via the control valve 21. In addition, the hydraulic pump 20 is connected to a hydraulic pump drive motor 23, which will be described later, and is driven by the hydraulic pump drive motor 23.

The control valve 21 is connected to the hydraulic pump 20, the hoisting device 15, the braking device 17, the steering device 18, and the accumulator 22. The control valve 21 distributes the pressure oil supplied from the hydraulic pump 20 to the hoisting device 15, the braking device 17, the steering device 18, and the accumulator 22. In addition, the control valve 21 is connected to the hydraulic fluid tank 19, and returns the remaining hydraulic fluid not distributed to any of the above-described devices to the hydraulic fluid tank 19.

The hoisting device 15 is driven by the pressure oil supplied from the hydraulic pump 20 via the control valve 21, and extends or retracts the hoist cylinder.

The braking device 17 is a hydraulic braking device driven by the pressure oil supplied from the hydraulic pump 20 via the control valve 21.

The steering device 18 is a hydraulic steering device driven by the pressure oil supplied from the hydraulic pump 20 via the control valve 21.

The accumulator 22 is a device in which pressure is stored by the pressure oil supplied from the hydraulic pump 20 via the control valve 21. The accumulator 22 is connected to the braking device 17 and the steering device 18, and may, together with the hydraulic pump 20, supply pressure oil (pressure) stored in the braking device 17 or the steering device 18.

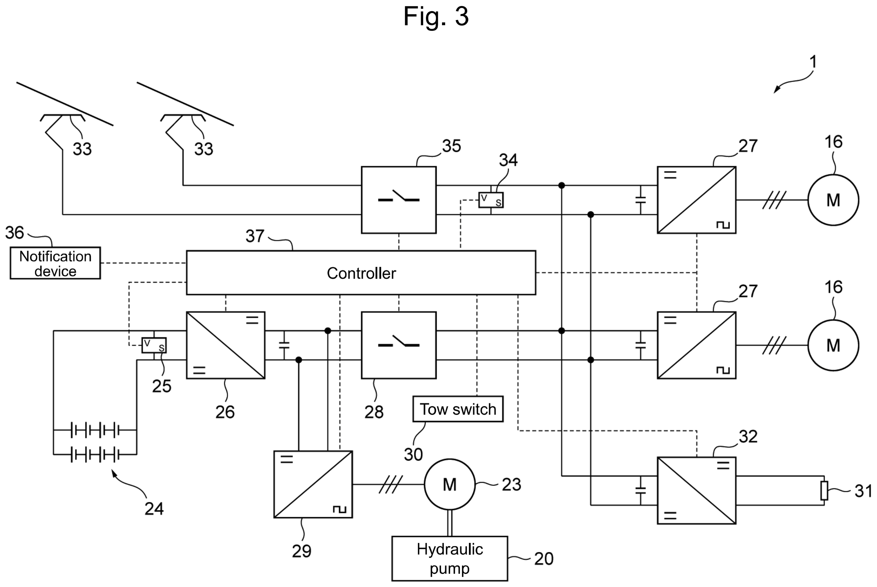

Fig. 3 is a schematic electric circuit diagram of the dump truck 1 according to the present embodiment.

The dump truck 1 includes the hydraulic pump drive motor 23 for driving the hydraulic pump 20 as illustrated in Fig. 2 and Fig. 3. As illustrated in Fig. 3, the dump truck 1 includes an electric circuit for driving the travel motor 16 and the hydraulic pump drive motor 23.

The dump truck 1 includes a battery 24, a first sensor 25, a DC/DC converter 26, a travel motor inverter 27, a first switch 28, a hydraulic pump drive motor inverter 29, and a controller 37 as devices forming the electric circuit. Furthermore, the dump truck 1 includes a resistor 31, a chopper 32, a pantograph 33, a second sensor 34, and a second switch 35.

In addition, the dump truck 1 includes a tow switch 30, which is a switch that receives an input operation for switching the setting between the normal mode or the towing mode. The tow switch 30 is provided inside of a driver's cab mounted on the dump truck 1, and is connected to the controller 37. The tow switch 30 transmits a signal to the controller 37 such that the normal mode or the towing mode is set according to the input operation by a passenger.

In addition, the dump truck 1 includes a display, a speaker, a buzzer, a display lamp, and a rotating light, and is provided with a notification device 36 that notifies to the passenger a state of the dump truck 1 based on a control signal from the controller 37.

The battery 24 supplies electric power to the travel motor 16 and the hydraulic pump drive motor 23. The battery 24 is connected to the travel motor 16 via the DC/DC converter 26 and the travel motor inverter 27. The battery 24 is connected to the hydraulic pump drive motor 23 via the DC/DC converter 26 and the hydraulic pump drive motor inverter 29.

The travel motor 16 is an electric motor powered by the electric power supplied from the battery 24. The travel motor 16 is an AC motor, and is connected to the travel motor inverter 27. The travel motor 16 is driven by the electric power supplied from the battery 24 via the DC/DC converter 26 and the travel motor inverter 27.

In addition, the travel motor 16 rotates, thus acting as a generator, and generates regenerative electric power. The regenerative electric power generated by the travel motor 16 is supplied to the battery 24. Note that the travel motor 16 becomes a regenerative braking mechanism for generating rotational resistance along with the generation of the regenerative electric power.

The hydraulic pump drive motor 23 is an electric motor powered by the electric power supplied from the battery 24. The hydraulic pump drive motor 23 is an AC motor, and is connected to the hydraulic pump drive motor inverter 29. The hydraulic pump drive motor 23 is driven by the electric power supplied from the battery 24 via the DC/DC converter 26 and the hydraulic pump drive motor inverter 29.

The first sensor 25 is provided between the battery 24 and the DC/DC converter 26. The first sensor 25 is a voltage sensor for detecting a voltage across the battery 24 (a voltage output by the battery 24). The first sensor 25 transmits the detected voltage of the battery 24 to the controller 37.

The DC/DC converter 26 is provided between the battery 24 and the travel motor inverter 27. On the basis of a control command from the controller 37, the DC/DC converter 26 steps up or steps down the DC power supplied from the battery 24 to a predetermined voltage and supplies the electric power to the travel motor inverter 27. In addition, the DC/DC converter 26 is provided between the battery 24 and the hydraulic pump drive motor inverter 29. On the basis of a control command from the controller 37, the DC/DC converter 26 steps up or steps down the DC power supplied from the battery 24 to a predetermined voltage and supplies the electric power to the hydraulic pump drive motor inverter 29. On the basis of a control command from the controller 37, the DC/DC converter 26 steps up or steps down the DC power supplied from the travel motor inverter 27 to a predetermined voltage and charges the electric power in the battery 24.

The travel motor inverter 27 is provided between the DC/DC converter 26 and the travel motor 16. On the basis of a control command from the controller 37, the travel motor inverter 27 converts the DC power supplied from the DC/DC converter 26 into AC power and supplies the electric power to the travel motor 16. In addition, on the basis of a control command from the controller 37, the travel motor inverter 27 converts the AC power, which is the regenerative electric power generated by the travel motor 16, into the DC power and supplies the electric power to the DC/DC converter 26.

The first switch 28 is a switch for allowing or stopping power supply from the battery 24 to the travel motor 16. The first switch 28 is provided between the DC/DC converter 26 and the travel motor inverter 27. The first switch 28 performs a close operation or an open operation to allow or stop power supply from the battery 24 to the travel motor 16 on the basis of a control signal from the controller 37.

The hydraulic pump drive motor inverter 29 is provided between the DC/DC converter 26 and the hydraulic pump drive motor 23. On the basis of a control command from the controller 37, the hydraulic pump drive motor inverter 29 converts the DC power supplied from the DC/DC converter 26 into AC power and supplies the electric power to the hydraulic pump drive motor 23.

The resistor 31 and the chopper 32 are connected in parallel with the travel motor inverter 27 connected to the travel motor 16, and the resistor 31 converts the regenerative electric power generated by the travel motor 16 into heat. The chopper 32 controls a power amount of the regenerative electric power to be supplied to the resistor 31 on the basis of a control command from the controller 37.

The pantograph 33 is provided in the upper front part of the dump truck 1 as illustrated in Fig. 1, and is configured to vertically extend and retract according to the operation by the passenger on the dump truck 1. By upward extension, the pantograph 33 contacts a trolley wire or the like, and receives power supply from the trolley wire or the like. In addition, by downward retraction, the pantograph 33 is separated from the trolley wire or the like, and stops the power supply from the trolley wire or the like. As illustrated in Fig. 3, the pantograph 33 is connected to the travel motor 16 via the travel motor inverter 27 and is connected to the battery 24 via the DC/DC converter 26.

The dump truck 1 provided with the pantograph 33 can also set, as a target point while being towed, a place where the dump truck 1 can receive power supply via the pantograph 33, such as the trolley wire or the like.

The second sensor 34 is provided between the pantograph 33 and the DC/DC converter 26. In addition, the second sensor 34 is provided between the pantograph 33 and the travel motor inverter 27. The second sensor 34 is a voltage sensor for detecting a voltage of the electric power supplied from the trolley wire or the like via the pantograph 33 or a voltage of the regenerative electric power generated by the travel motor 16. The second sensor 34 transmits the detected voltage of the electric power supplied from the trolley wire or the like or the voltage of the regenerative electric power generated by the travel motor 16 to the controller 37.

The second switch 35 is a switch for allowing or stopping power supply from the pantograph 33 to the battery 24 or the travel motor 16. The second switch 35 is provided between the pantograph 33 and the travel motor inverter 27. In addition, the second switch 35 is provided between the pantograph 33 and the DC/DC converter 26. The second switch 35 performs a close operation or an open operation in association with the vertical extension and retraction of the pantograph 33 to allow or stop power supply from the pantograph 33 to the battery 24 or the travel motor 16 on the basis of a control signal from the controller 37.

The controller 37 is configured with a processor such as a CPU, a memory, an I/O interface, and the like. The controller 37 controls the operations of the components of the dump truck 1 by the CPU executing the program stored in the memory on the basis of signals from the components illustrated in Fig. 3.

The controller 37 estimates a remaining amount of the battery 24 on the basis of the voltage of the battery 24 transmitted from the voltage sensor of the first sensor 25. Note that the remaining amount of the battery 24 indicates a remaining capacity, expressed as a percentage, that remains when the battery 24 is discharged after it has been fully charged to a capacity of 100%.

When the estimated remaining amount of the battery 24 is less than or equal to a first specified value D1, the controller 37 performs control such that the power supply from the battery 24 to the travel motor 16 is stopped. Note that the first specified value D1 is a preset value of the remaining amount of the battery 24 indicating that the dump truck 1 is unable to travel on its own. The first specified value D1 is a value of the remaining amount of the battery 24 greater than 0%. The first specified value D1 is a value of the remaining amount of the battery 24 that allows the hydraulic pump drive motor 23 to be driven. The first specified value D1 is a value that can be changed depending on a travel environment or the like. The first specified value D1 may be 10%, for example.

In addition, preferably when the estimated remaining amount of the battery 24 is less than or equal to the first specified value D1, the controller 37 controls the first switch 28 to perform an open operation to stop the power supply from the battery 24 to the travel motor 16. Furthermore, when the estimated remaining amount of the battery 24 is less than or equal to the first specified value D1, the controller 37 may control the hydraulic pump drive motor inverter 29 to stop the power supply from the battery 24 to the hydraulic pump drive motor 23.

The controller 37 sets the operation mode of the dump truck 1 to the normal mode or the towing mode on the basis of a signal transmitted from the tow switch 30. Specifically, when the remaining amount of the battery 24 is less than or equal to the first specified value D1 and on receiving a signal for setting the towing mode from the tow switch 30, the controller 37 sets the operation mode of the dump truck 1 to the towing mode. Meanwhile, when the remaining amount of the battery 24 is less than or equal to the first specified value D1 and the operation mode of the dump truck 1 is set to the towing mode, and on receiving a signal for setting the normal mode, that is, a signal for cancelling the towing mode, from the tow switch 30, the controller 37 sets the operation mode of the dump truck 1 to the normal mode.

In the towing mode in which the dump truck 1 is towed, the controller 37 performs control such that the electric power of the battery 24 is supplied to only the hydraulic pump drive motor 23 among the electrically-operated components performing a rotational operation or a linear motion operation using the battery 24 as a power source in the normal mode. Note that in the normal mode, or in the towing mode when electric power is required for the operation of the notification device and the operation related to regenerative electric power, the controller 37 does not prevent the electric power from being supplied to a device requiring the electric power.

In the towing mode, the controller 37 may control the travel motor inverter 27 to always generate regenerative braking to an extent that does not interfere with towing.

In the towing mode, the controller 37 performs control such that the regenerative electric power generated by the travel motor 16 is charged in the battery 24. Specifically, in the towing mode, the controller 37 controls the travel motor inverter 27 and the DC/DC converter 26 such that the regenerative electric power generated by the travel motor 16 is charged in the battery 24.

In the towing mode and when the remaining amount of the battery 24 is less than or equal to a second specified value D2 that is less than the first specified value D1, the controller 37 causes the notification device 36 to issue an alert. Specifically, in the towing mode and when the remaining amount of the battery 24 is less than or equal to the second specified value D2 that is less than the first specified value D1, the controller 37 controls the notification device 36 to issue an alert and notify to the passenger that the remaining amount of the battery 24 is very low. Note that the second specified value D2 is a preset value of the remaining amount of the battery 24 that is greater than 0% and less than the first specified value D1. The second specified value D2 is a value that can be changed depending on a travel environment or the like. The second specified value D2 may be 3% to 5%, for example.

In the towing mode, the controller 37 sets an upper limit L of the rotation speed of the hydraulic pump drive motor 23 to a lower value than in the normal mode of travel by the travel motor 16. Specifically, in the towing mode, the controller 37 controls the hydraulic pump drive motor inverter 29 such that the upper limit L of the rotation speed of the hydraulic pump drive motor 23 is set to an upper limit L1 or L2 that is lower than an upper limit L0 in the normal mode. The upper limit L1 is the upper limit L lower than the upper limit L0 in the normal mode. The upper limit L2 is the upper limit L lower than the upper limit L1. Preferably, in the towing mode, the controller 37 changes the upper limit L of the rotation speed of the hydraulic pump drive motor 23 depending on the remaining amount of the battery 24. Specifically, in the towing mode, the controller 37 controls the hydraulic pump drive motor inverter 29 so as to set the upper limit L of the rotation speed of the hydraulic pump drive motor 23 to the upper limit L1 or L2 that is lower than the upper limit L0 in the normal mode depending on the remaining amount of the battery 24. The controller 37 sets the upper limit L of the rotation speed in the order of the upper limit L0 to the upper limit L1, the upper limit L2 such that the upper limit L becomes lower than the current one as the remaining amount of the battery 24 becomes low.

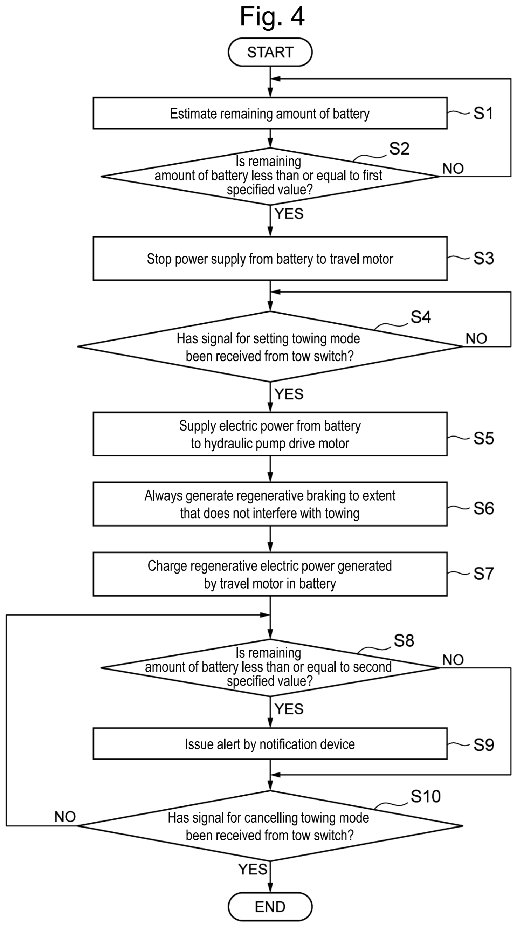

Fig. 4 is a flowchart illustrating an exemplary operation of the controller 37 related to towing of the dump truck 1 according to the present embodiment.

In the operation example illustrated in Fig. 4, a default open or closed state of the first switch 28 is set in advance to the closed state that allows power supply from the battery 24 to the travel motor 16. In the operation example illustrated in Fig. 4, a default open or closed state of the second switch 35 is set in advance to the open state that stops the power supply from the pantograph 33 to the battery 24 or the travel motor 16.

The controller 37 estimates the remaining amount of the battery 24 on the basis of the voltage of the battery 24 received from the first sensor (step S1).

The controller 37 determines whether the remaining amount of the battery 24 is less than or equal to the first specified value D1 (step S2). The controller 37 repeats the process of step S1 and the determination of step S2 until the remaining amount of the battery 24 is determined to be less than or equal to the first specified value D1 (if No in step S2).

If the remaining amount of the battery 24 is determined to be less than or equal to the first specified value D1 (Yes in step S2), the controller 37 controls the travel motor inverter 27 to stop the power supply from the battery 24 to the travel motor 16 (step S3).

After stopping the power supply from the battery 24 to the travel motor 16, the controller 37 checks whether a signal for setting the towing mode has been received from the tow switch 30 (step S4).

If a signal for setting the towing mode has been received from the tow switch 30 (Yes in step S4), the controller 37 sets the operation mode of the dump truck 1 to the towing mode. Then, the controller 37 controls the DC/DC converter 26 and the hydraulic pump drive motor inverter 29 so as to supply electric power from the battery 24 to the hydraulic pump drive motor 23 (step S5).

With the electric power supplied from the battery 24 to the hydraulic pump drive motor 23 through the process of step S5, the dump truck 1 can now drive the braking device 17 and the steering device 18. Then, the dump truck 1 begins to be towed while being coupled to the other vehicle 3.

Once the dump truck 1 begins to be towed, the travel motor 16 is rotated according to the rotation of tires. In this case, the controller 37 controls the travel motor inverter 27 to always generate regenerative braking to an extent that does not interfere with towing (step S6). Accordingly, the travel motor 16 functions as a generator and generates regenerative electric power.

In the towing mode, the controller 37 controls the travel motor inverter 27 and the DC/DC converter 26 such that the regenerative electric power generated by the travel motor 16 is charged in the battery 24 (step S7).

In the towing mode, the controller 37 determines whether the remaining amount of the battery 24 is less than or equal to the second specified value D2 that is less than the first specified value D1 (step S8).

If the remaining amount of the battery 24 is determined to be less than or equal to the second specified value D2 (Yes in step S8), the controller 37 controls the notification device 36 to issue an alert and notify to the passenger that the remaining amount of the battery 24 is very low (step S9).

In the towing mode, if the remaining amount of the battery 24 is greater than the second specified value D2 (No in step S8), or after an alert is issued by the notification device 36, the controller 37 checks whether a signal for cancelling the towing mode has been received from the tow switch 30 (step S10).

If a signal for cancelling the towing mode has been received from the tow switch 30 (Yes in step S10), the controller 37 cancels the towing mode that is the operation mode of the dump truck 1, and the operation process of the controller 37 related to towing ends. The controller 37 repeats the determination of step S8, the process of step S9, and the determination of step S10 until a signal for cancelling the towing mode is received from the tow switch 30 (if No in step S10).

As described above, the dump truck 1 according to the present embodiment includes the travel motor 16, the hydraulic pump 20 that supplies pressure oil to at least one of the braking device 17 and the steering device 18, and the hydraulic pump drive motor 23 that drives the hydraulic pump 20. The dump truck 1 according to the present embodiment is an electric dump truck including the battery 24 that supplies electric power to the travel motor 16 and the hydraulic pump drive motor 23, and the controller 37 that controls power supply from the battery 24 to the travel motor 16 and the hydraulic pump drive motor 23. In the dump truck 1 according to the present embodiment, in the towing mode in which the dump truck 1 is towed, the controller 37 performs control such that the electric power of the battery 24 is supplied to only the hydraulic pump drive motor 23.

With this configuration, the dump truck 1 according to the present embodiment supplies electric power from the battery 24 to the hydraulic pump drive motor 23 in the towing mode. Accordingly, the dump truck 1 according to the present embodiment can drive the braking device 17 and the steering device 18 that are minimum required devices when the dump truck 1 is towed using the remaining amount of its own battery 24 without relying on an external device. Furthermore, in the towing mode, the dump truck 1 according to the present embodiment limits the device to be supplied with the electric power of the battery 24 to the hydraulic pump drive motor 23, and thus needless consumption of the battery 24 can be suppressed. Accordingly, the dump truck 1 according to the present embodiment can suppress early deterioration of the battery 24. Thus, according to the dump truck 1 of the present embodiment, in the electric dump truck, it is possible to ensure a hydraulic source required when the electric dump truck is towed without relying on an external hydraulic source, while preventing early deterioration of a battery.

Furthermore, in the dump truck 1 according to the present embodiment, in the towing mode, the controller 37 performs control such that the regenerative electric power generated by the travel motor 16 is charged in the battery 24.

With this configuration, the dump truck 1 according to the present embodiment can effectively utilize the regenerative electric power generated by the travel motor 16 to charge the battery 24 as the electric power of the battery 24, which is the main source of the hydraulic source required when the dump truck 1 is towed. Accordingly, with the regenerative electric power charged in the battery 24, the dump truck 1 according to the present embodiment can achieve an extended period of time of being towed while preventing the remaining amount of the battery 24 from falling to 0%. Thus, according to the dump truck 1 of the present embodiment, it is possible to easily ensure a hydraulic source required when the dump truck 1 is towed without relying on an external hydraulic source, while preventing early deterioration of a battery.

Furthermore, in the dump truck 1 according to the present embodiment, in the towing mode, the controller 37 sets the upper limit L of the rotation speed of the hydraulic pump drive motor 23 to a lower value than in the normal mode of travel by the travel motor 16.

With this configuration, the dump truck 1 according to the present embodiment can suppress needless consumption of the battery 24 while ensuring minimum required braking performance and steering performance. Thus, according to the dump truck 1 of the present embodiment, it is possible to easily ensure a hydraulic source required when the dump truck 1 is towed without relying on an external hydraulic source, while preventing early deterioration of a battery.

Furthermore, in the dump truck 1 according to the present embodiment, the controller 37 changes the upper limit L of the rotation speed of the hydraulic pump drive motor 23 depending on the remaining amount of the battery 24.

With this configuration, the dump truck 1 according to the present embodiment can appropriately suppress needless consumption of the battery 24 in accordance with the remaining amount of the battery 24 while ensuring minimum required braking performance and steering performance. Thus, according to the dump truck 1 of the present embodiment, it is possible to easily ensure a hydraulic source required when the dump truck 1 is towed without relying on an external hydraulic source, while preventing early deterioration of a battery.

Furthermore, in the dump truck 1 according to the present embodiment, when the remaining amount of the battery 24 is less than or equal to the first specified value D1, the controller 37 performs control such that the power supply from the battery 24 to the travel motor 16 is stopped.

With this configuration, when the remaining amount of the battery 24 is less than or equal to the first specified value D1, the dump truck 1 according to the present embodiment stops the power supply from the battery 24 to the travel motor 16, and thus can suppress discharging of the battery 24 while keeping the remaining amount of the battery 24 being above 0%. Accordingly, the dump truck 1 according to the present embodiment can easily prevent early deterioration of the battery 24. Thus, according to the dump truck 1 of the present embodiment, it is possible to easily ensure a hydraulic source required when the dump truck 1 is towed without relying on an external hydraulic source, while preventing early deterioration of a battery.

Furthermore, the dump truck 1 according to the present embodiment further includes the notification device 36 that issues an alert. In the dump truck 1 according to the present embodiment, in the towing mode and when the remaining amount of the battery 24 is less than or equal to the second specified value D2 that is less than the first specified value D1, the controller 37 causes the notification device 36 to issue an alert.

With this configuration, the dump truck 1 according to the present embodiment can prevent excessive discharging of the battery 24 by informing a passenger not to run out of the battery 24 until the remaining amount of the battery 24 reaches 0%. Thus, according to the dump truck 1 of the present embodiment, early deterioration of a battery can further be suppressed.

Note that the dump truck 1 according to the present embodiment may include the tow switch 30 that receives an input operation for switching the setting between the normal mode or the towing mode. The controller 37 may set the operation mode to the towing mode by receiving an input signal of the tow switch 30, and supply the electric power of the battery 24 only to the hydraulic pump drive motor 23.

Accordingly, in the dump truck 1 according to the present embodiment, when a signal for setting the towing mode is received from the tow switch 30, the controller 37 sets the operation mode to the towing mode. That is, in the dump truck 1 according to the present embodiment, the setting of the normal mode will not be automatically switched to the towing mode unless a signal for setting the towing mode is received from the tow switch 30. Accordingly, the dump truck 1 according to the present embodiment can suppress occurrence of switching to an unintended operation mode, and can switch the operation mode at a timing intended by the passenger according to the passenger's intension. Consequently, the dump truck 1 according to the present embodiment operates in the operation mode along the passenger's intension. Therefore, the dump truck 1 according to the present embodiment can improve safety.

Although the embodiment of the present invention has been described in detail above, the present invention is not limited to the above embodiment, and various design changes are possible in so far as they are within the spirit of the present invention in the scope of the claims. In the present invention, it is possible to add, to a configuration of an embodiment, a configuration of another embodiment, to replace a configuration of an embodiment with a configuration of another embodiment, or to delete a part of a configuration of an embodiment.

### Reference Signs List

- 1: Dump truck
- 16: Travel motor
- 17: Braking device
- 18: Steering device
- 20: Hydraulic pump
- 23: Hydraulic pump drive motor
- 24: Battery
- 30: Tow switch
- 36: Notification device
- 37: Controller
- D1: First specified value
- D2: Second specified value
- L, L0, L1, L2: Upper limit of rotation speed of hydraulic pump drive motor

## Claims

1. A dump truck of an electric type, comprising:
a travel motor;
a hydraulic pump configured to supply pressure oil to at least one of a braking device and a steering device;
a hydraulic pump drive motor configured to drive the hydraulic pump;
a battery configured to supply electric power to the travel motor and the hydraulic pump drive motor; and
a controller configured to control power supply from the battery to the travel motor and the hydraulic pump drive motor,
wherein in a towing mode in which the dump truck is towed, the controller performs control such that electric power of the battery is supplied to only the hydraulic pump drive motor.

2. The dump truck according to claim 1, wherein in the towing mode, the controller performs control such that regenerative electric power generated by the travel motor is charged in the battery.

3. The dump truck according to claim 1, wherein in the towing mode, the controller sets an upper limit of a rotation speed of the hydraulic pump drive motor to a lower value than in a normal mode of travel by the travel motor.

4. The dump truck according to claim 3, wherein the controller changes the upper limit of the rotation speed of the hydraulic pump drive motor depending on a remaining amount of the battery.

5. The dump truck according to claim 1, wherein when the remaining amount of the battery is less than or equal to a first specified value, the controller performs control such that power supply from the battery to the travel motor is stopped.

6. The dump truck according to claim 5, further comprising a notification device configured to issue an alert,
wherein in the towing mode and when the remaining amount of the battery is less than or equal to a second specified value that is less than the first specified value, the controller causes the notification device to issue an alert.
